# EUROPÄISCHE PATENTSCHRIFT

(11) **EP 0 576 397 B1**
(45) Veröffentlichungstag und Bekanntmachung des Hinweises auf die Patenterteilung: **22.07.1998**
(21) Anmeldenummer: 93810431.2
(22) Anmeldetag: 16.06.1993
(51) Int. Cl.: C08L 63/00

(54) **Lagerstabile Suspension von Härtern und Zähigkeitsvermittlern für Epoxidharze**
Storage-stable suspension of hardeners and impact modifiers for epoxy resins
Suspension stable au stockage des durcisseurs et des modificateurs de résistance au choc pour des résines époxyde

(30) Priorität: 25.06.1992 CH 2008/92
(43) Veröffentlichungstag der Anmeldung: 29.12.1993
(73) Patentinhaber: Ciba Specialty Chemicals Holding Inc., 4057 Basel (CH)
(72) Erfinder: Eldin, Sameer H., Dr., CH-1784 Courtepin (CH); Peyer, Robert Peter, Dr., CH-4415 Lausen (CH); Setiabudi, Frans, Dr., D-7812 Bad Krozingen (DE)

(56) Entgegenhaltungen:
- WO-A-87/00188
- CH-A- 415 045
- US-A- 4 841 010
- US-A- 5 075 379

## Beschreibung

Die vorliegende Erfindung betrifft eine lagerstabile Suspension aus einem Härtungsmittel für Epoxidharze und einem darin suspendierten festen Propfpolymer oder festen Core/Shell-Polymer als Zähigkeitsvermittler.

Es ist bekannt, härtbaren Epoxidharzgemischen Zähigkeitsvermittler (sogenannte "toubhener"), wie beispielsweise Core/Shell-Polymere, zuzusetzen, um die Zähigkeitseigenschaften der aus diesen Epoxidharzgemischen hergestellten Formstoffe zu verbessern. Bei Verwendung von festen Zähigkeitsvermittlern ist es für die zähigkeitsvermittelnde Wirkung sehr wichtig, dass diese in der Epoxidharzzusammensetzung in möglichst homogener Verteilung vorliegen, wobei auch die Teilchengrösse der festen Zähigkeitsvermittler eine Rolle spielt. Die Verteilung der Komponenten einer Epoxidharzzusammensetzung untereinander wird in der Regel durch einfaches Verrühren der Komponenten vorgenommen, wobei je nach Rührvorgang und -dauer Epoxidharzzusammensetzungen mit unterschiedlich homogener Verteilung erhalten werden. Wie anhand von elektronenmikroskopischen Aufnahmen von solchen Mischungen nachgewiesen wurde, liegen darin die festen Zähigkeitsvermittler in Form von Agglomeraten vor. Ein typisches Beispiel für die heute übliche Verarbeitungsweise ist in der EP-A-0 189 048 aufgeführt, wobei eine härtbare Epoxidharzzusammensetzung, die gegebenenfalls ein Butadien-Styrol-Acrylnitril-Copolymer als Core/Shell-Polymer-Zähigkeitsvermittler enthält, durch einfaches Verrühren der Komponenten hergestellt wird.

Die in der EP-A-0 449 776 offenbarten, einen Zähigkeitsvermittler, beispielsweise ein Core/Shell-Polymeres, ein Carbonsäureanhydridhärter und eine Verbindung mit zwei reaktiven Wasserstoffatomen enthaltenen Epoxidharzzusammensetzungen werden vermischt, indem unter anderem erst eine Supension aus dem Epoxidharz und dem Zähigkeitsvermittler hergestellt wird, die dann mit einem spezifischen Härtungsmittelgemisch vermischt wird.

Es wurde nun gefunden, dass man durch Suspendieren eines festen Pfropfpolymers oder festen Core/Shell-Polymers in einem Epoxidharzhärtungsmittel eine lagerstabile Suspension erhält, in der der Zähigkeitsvermittler homogen und feinstverteilt in Form von Partikeln im Submicron-Bereich vorliegt, das heisst, die durchschnittliche Partikelgrösse des Zähigkeitsvermittlers in der Suspension beträgt im Durchschnitt 10⁻⁶ m, vorzugsweise kleiner als 10⁻⁶ m. Mit Hilfe solcher lagerstabilen Suspensionen werden auch in härtbaren Epoxidharzzusammensetzungen eine homogenere Verteilung der Mischungskomponenten erreicht, so dass eine gewisse Qualitätskonstanz bezüglich der homogenen Verteilung gewährleistet ist.

Gegenstand vorliegender Erfindung ist somit eine lagerstabile Suspensionen aus einem festen oder flüssigen Epoxidharzhärtungsmittel und einem darin homogen und feinstverteilt in Form von Partikeln suspendierten festen Pfropfpolymer oder festen Core/Shell-Polymer, das keine mit dem Härtungsmittel reaktionsfähige Gruppen aufweist, als Zähigkeitsvermittler, die erhalten wird, indem man entweder
a), bei Verwendung von wasserempfindlichen Härtungsmitteln, zur wässrigen Emulsion des Zähigkeitsvermittlers eine geeignetes organisches Lösungsmittel beigibt, das Wasser azeotrop unter Vakuum abdestilliert, dann das Epoxidharzhärtungsmittel dazugibt und das restliche Lösungsmittel abdestilliert, oder
b), bei Verwendung von wasserunempfindlichen Härtungsmitteln, die wässrige, kein oder ein organisches Lösungsmittel enthaltende Emulsion des Zähigkeitsvermittlers in das flüssige oder aufgeschmolzene Epoxidharzhärtungsmittel einträgt und das Wasser und ein gegebenenfalls vorhandenes organisches Lösungsmittel unter Vakuum abdestilliert.

Zur Herstellung der erfindungsgemässen lagerstabilen Suspensionen können die üblichen Härtungsmittel für Epoxidharze. wie beispielsweise Dicyandiamid, Polycarbonsäuren, Polycarbonsäureanhydride, Polyamine, Polyaminoamide, amingruppenhaltige Addukte aus Aminen und Polyepoxidverbindungen sowie Polyole verwendet werden.

Als Polycarbonsäuren für die oben genannten Suspensionen eignen sich zum Beispiel aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure, cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren.

Als Polyamine können für die oben genannten Suspensionen aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harze, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren.

Als aliphatische Polyole für die oben genannten Suspensionen eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die oben genannten Suspensionen beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art, eingesetzt werden.

Es können auch katalytisch wirkende Härtungsmittel zur Herstellung der erfindungsgemässen Suspensionen verwendet werden, wie tertiäre Amine, beispielsweise 2,4,6-Tris-(dimethylaminoethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe und Chelate, die durch Umsetzung von Bortrifluorid mit zum Beispiel 1,3-Diketonen erhalten werden. Bei Verwendung von katalytisch wirkenden Härtungsmitteln suspendiert man diese vorzugsweise im Zähigkeitsvermittler. Dabei werden vorzugsweise auf 10 Gewichtsteile Zähigkeistvermittler 0,1 bis 10 Gewichtsteile Härtungskatalysator eingesetzt.

Es können auch Gemische von Härtungsmitteln für die erfindungsgemässen Suspensionen verwendet werden, sofern sie untereinander nicht reagieren.

Vorzugsweise enthalten die erfindungsgemässen Suspensionen ein flüssiges Epoxidharzhärtungsmittel.

Weiter bevorzugt für die Herstellung der erfindungsgemässen Suspensionen sind von den Epoxidharzhärtungsmitteln die Polycarbonsäureanhydride und die Polyamine. Inbesondere verwendet man für die Herstellung der erfindungsgemässen Suspensionen flüssige Polycarbonsäureanhydride und flüssige Polyamine.

Bei der Härtung der Epoxidharzzusammensetzungen können auch geeignete Härtungsbeschleuniger eingesetzt werden. Beispielsweise können bei Verwendung von Dicyandiamid, Polyaminoamiden, Polycarbonsäuren und deren Anhydriden als Beschleuniger tertiäre Amine oder deren Salze, quaternäre Ammoniumverbindungen oder Alkalimetallalkoxide verwendet werden.

Als Zähigkeitsvermittler für die erfindungsgemässen lagerstabilen Suspensionen kommen die festen Pfropfpolymere in Frage, wie sie beispielsweise in der US-A 3,496,250 beschrieben sind, sowie die festen Core/Shell-Polymere, wie sie beispielsweise aus der EP-A-0-045 357 und der US-A-4,419.496 bekannt sind.

Feste Zähigkeitsvermittler bieten den Vorteil, dass die Teilchengrösse wie auch der Anteil der zähigkeitsvermittelnden Phase in der Suspension vorgegeben sind. Bei den flüssigen Zähigkeitsvermittlern wird die erforderliche zweite Phase erst während der Härtung mit dem Epoxidharz gebildet.

Die verwendeten festen Zähigkeitsvermittler weisen keine reaktiven Gruppen auf, die mit den reaktiven Gruppen des Epoxidharzhärtungsmittels reagieren können.

Beispiele für Pfropfpolymere sind Methacrylat/Butadien-Styrol-, Acrylat-Methacrylat/Butadien-Styrol- oder Acrylnitril/Butadien-Styrol-Polymere.

Core/Shell-Polymere haben in der Regel einen weichen Kern (Core) aus einem elastomeren Material, der im Epoxidharz unlöslich ist. Darauf aufgepfropft ist eine Schale (Shell) aus polymerem Material, das sowohl eine mit Epoxygruppen reaktionsfähige wie auch eine nichtreaktionsfähige Funktionalität aufweisen kann. Das Core/Shell-Polymer kann auch ein sogenanntes Multicore/Shell-Polymer sein, wie beispielsweise ein solches mit der Aufbaufolge weicher Kern, harte Schale, weiche Schale und harte Schale. Solche Polymere sind beispielsweise in der GB-A-2,039,496 beschrieben.

Beispiele für Elastomere, die als Core-Material eingesetzt werden können, sind Polybutadien, Polyacrylsäure- und Polymethacrylsäureester sowie deren Co- oder Terpolymere, wie zum Beispiel mit Polystyrol, Polyacrylnitril oder Polysulfid. Vorzugsweise enthält das Core-Material Polybutadien oder Polybutylacrylat.

Beispiele für polymere Shell-Materialien sind Polystyrol, Polyacrylnitril, Polyacrylat- und -methacrylatmono-, -co- oder -terpolymere oder Styrol/Acrylnitril/Glycidylmethacrylat-Terpolymere.
Vorzugsweise wird als Shell-Material Polymethylmethacrylat eingesetzt.

Die Grösse solcher Core/Shell-Partikel beträgt zweckmässig 0,05-30 µm, vorzugsweise 0,05-15 µm. Insbesondere gelangen Core/Shell-Partikel mit einer Grösse von kleiner als 1 µm zur Anwendung.

Die Core/Shell-Polymere lassen sich nach der z.B. in der US-A-4,419,496 oder der EP-A-0 045 357 beschriebenen Weise herstellen.

Bevorzugt werden Core/Shell-Polymere eingesetzt, die einen Kern (Core) aus Polybutadien, Polybutadien/Polystyrol oder Polybutylacrylat enthalten. Im Falle des Polybutadiens ist das Core-Material vorzugsweise teil vernetzt. Weitere Core-Materialien sind Polyacrylate und -methacrylate generell, insbesondere Polyacrylsäure- und Polymethacrylsäuremethylester.

Die Schale (Shell) besteht vorzugsweise aus Polymeren auf der Basis von Methylmethacrylat, Methacrylsäurecyclohexylester, Acrylsäurebutylester, Styrol oder Methacrylnitril.

Die Menge des Zähigkeitsvermittlers in den erfindungsgemässen, ein Epoxidharzhärtungsmittel enthaltenden Suspensionen beträgt vorzugsweise 5 bis 80 Gew.-%, insbesondere 10 bis 50 Gew.-%, bezogen auf das Epoxidharzhärtungsmittel.

Die erfindungsgemässen Suspensionen können hergestellt werden, indem man entweder
a), bei Verwendung von wasserempfindlichen Härtungsmitteln, zur wässrigen Emulsion des Zähigkeitsvermittlers ein geeignetes organisches Lösungsmittel beigibt, das Wasser azeotrop unter Vakuum abdestilliert, dann das Epoxidharzhärtungsmittel zugibt und das restliches Lösungsmittel unter einem Vakuum abdestilliert oder
b), bei Verwendung von wasserunempfindlichen Härtungsmitteln, die wässrige, kein oder ein organisches Lösungsmittel enthaltende Emulsion des Zähigkeitsvermittlers in das flüssige oder aufgeschmolzene Epoxidharzhärtungsmittel einträgt und das Wasser und ein gegebenenfalls vorhandenes organisches Lösungsmittel unter einem Vakuum abdestilliert.

Die erfindungsgemässen Suspensionen können auch die in der Epoxidharztechnik üblichen Füllstoffe enthalten. Als solche kommen beispielsweise die folgenden Füllstoffe in Betracht: Mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit.

Die erfindungsgemässen lagerstabilen Suspensionen aus einem Epoxidharzhärtungsmittel und einem darin suspendierten Zähigkeitsvermittler eignen sich in einfacher und praktischer Weise zur Herstellung von härtbaren Epoxidharzzusammensetzungen mit homogener Verteilung des Zähigkeitsvermittlers auch in der Epoxidharzzusammensetzung, wobei diese ebenfalls als Suspension vorliegen kann. Die erfindungsgemässen Suspensionen stellen somit verarbeitungstechnisch gesehen eine Vereinfachung zur Herstellung von härtbaren Epoxidharzzusarnmenstzungen mit homogener Verteilung eines darin enthaltenen Zähigkeitsvermittlers dar. Ausserdem wird bei der Herstellung solcher Epoxidharzzusammensetzungen in vorteilhafter Weise eine gewisse Qualitätskonstanz erreicht.

### Beispiel 1: Herstellung einer Carbonsäureanhydrid/Zähigkeitsvermittler-Suspension

a) Herstellung eines Zähigkeitsvermittlers aus einem Core/Shell-Polymer:
202,7 g Polybutadienlatex (BL 2004 K der Firma Bayer AG) mit einem Feststoffgehalt von 59,2 % und 397,3 g deionisiertes Wasser werden in einem 1 Liter-Planschliffkolben, der mit Doppelmantel. Glasankerrührer, Thermometer, Kühler, Umlaufthermostat und Gas-Anschluss ausgerüstet ist, unter Stickstoff vorgelegt und mit 100 rpm (Umdrehungen pro Minute) gerührt. Das Gemisch wird auf 80°C ± 1°C aufgeheizt. Nach etwa 55 Minuten (min) ist eine Innentemperatur von 80°C erreicht. Nun wird mit dem Zutropfen von 120,0 g destilliertem Methacrylsäuremethylester (purum, der Firma Fluka, Schweiz) und einer Lösung von 4,0 g Kaliumperoxiddisulfat und 3,5 g Dodecylbenzolsulfonsäure-Nasalz in 110 ml destilliertem Wasser begonnen. Nach 3,5 Stunden (h) liegt eine homogene, weisse Emulsion vor. Nach insgesamt 6 h 10 min ist die Zugabe des Methylmethacrylats sowie des Initiators beendet.
Es wird während weiteren 2 h bei 80°C nachgerührt. Am Ende dieser Zeit werden 3 ml einer 20%igen Emulsion von n-Octadecyl-3-(3,5-di-tert.-butyl-4-hydroxyphenyi)-propionat der homogenen weissen Emulsion beigegeben, und das Ganze wird dann auf Raumtemperatur (RT) abgekühlt. Bei RT ist die Emulsion ebenfalls homogen und weiss gefärbt. Sie wird durch Glaswolle filtriert. Es sind keine Agglomerate vorhanden. Die Emulsion wird auf 815 g verdünnt was einen Festkörpergehalt von 29,4 % ergibt. Die so erhaltene Emulsion wird als Zähigkeitsvermittler (toughener) eingesetzt.
b) In einem 1 Liter-Planschliffkolben, der mit Rührer, Thermometer, Vakuum-Anschluss, Wasserabscheider und Umlaufthermostat ausgerüstet ist, werden 200 g der gemäss Beispiel 1a) erhaltenen Core/Shell-Polymer-Emulsion und 400 ml Methylisobutylketon vorgelegt. Bei einer Aussentemperatur (TA) von 140°C werden bei 86°C in 2 Stunden etwa 140 ml Wasser abdestilliert. Anschliessend werden etwa 150 ml Methylisobutylketon abdestilliert. Der Wasserabscheider wird entfernt, und es wird eine konventionelle Destillationsvorrichtung angebracht. Nun werden 528,61 g Methyltetrahydrophthalsäureanhydrid (niederviskos mit einer Viskosität von 50-100 mPa·s bei 25°C) zur Emulsion gegeben und mit etwas Methylisobutylketon gespühlt. Bei einer TA von 110°C, einer Innentemperatur (TI) von 100°C und einem Druck von 215-250 mbar wird der grösste Teil des Lösungsmittels abdestilliert. Der Rest des Lösungsmittels wird während einer weiteren Stunde bei 110/30 mbar entfernt. Man erhält eine sehr feine Suspension des Core/Shell-Polymers im flüssigen Methyltetrahydrophthalsäureanhydrid mit folgenden Eigenschaften:

| | |
|---|---|
| Viskosität (Epprecht) bei 25°C | 125 mPa·s |
| Anhydrid-Gehalt | 10,80 Aequivalente/kg. |

### Beispiel 2: Herstellung einer Polyamin/Zähigkeitsvermittler-Suspension

a) Es wird analog Beispiel 1a) eine Core/Shell-Emulsion hergestellt. Der Festkörpergehalt der erhaltenen Emulsion beträgt 28,75%.
b) In der Apparatur gemäss Beispiel 1b) werden 650,0 g 3,3'-Dimethyl-4,4'-diaminodicyclohexylmethan vorgelegt und 565,2 g der gemäss Beispiel 2a) erhaltenen Core/Shell-Polymer-Emulsion unter stetem Rühren eingeleitet. Anschliessend wird bei 80-90°C und einem Vakuum von 40 mbar das Wasser abdestilliert. Man erhält eine homogene, fast transparente Emulsion als Masse, die bei RT leicht wachsartig wird und folgende Eigenschaften aufweist:

| | |
|---|---|
| Viskosität (Epprecht) bei 40°C | 670 mPa·s |
| Amin-Gehalt | 6,80 Aequivalente/kg. |

### Beispiel 3: Herstellung einer Polyamin/Zähigkeitsvermittler-Suspension

a) Es wird analog Beispiel 1a) eine Core/Shell-Emulsion hergestellt. Der Festkörpergehalt der erhaltenen Emulsion beträgt 29,8%.
b) 335,6 g der gemäss Beispiel 3a) erhaltenen Core/Shell-Polymer-Emulsion und 269,0 g 4,4'-Diaminodiphenylmethan (fest, Smp. 88-92°C) werden vorgelegt und ohne Rühren erwärmt. Bei einer Tl von 62°C wird das Gemisch vorsichtig gerührt bis das 4,4'-Diaminodiphenylmethan suspendiert ist. Dann wird ein Vakuum von etwa 600 mbar angelegt, und bei einer TI von 106°C ist das 4,4'-Diaminodiphenylmethan geschmolzen, und die Suspension ist gut rührbar. Bei einer TI von 112°C/620 mbar beginnt das Wasser zu destillieren, und bei einer TI von 123°C wird das Vakuum stufenweise bis zu 330 mbar erhöht. Bei einer TI von 126°C und einem Vakuum von 35 mbar ist praktisch das ganze Wasser abdestilliert. Es liegt eine homogene, leicht braune , mässig viskose Suspension vor, die anschliessend noch 5 min im Hochvakuum getrocknet wird. Die braune homogene Masse wird auf beschichtetes Papier ausgegossen. Nach der Verfestigung bzw. dem Auskristallisieren wird sie im Mixer mechanisch zerkleinert. Es werden 367,2 g eines Pulvers mit einem Amin-Gehalt von 7,41 Aequivalenten/kg erhalten.

### Beispiel 4: Herstellung einer Carbonsäureanhydrid/Zähigkeitsvermittler-Suspension

a) Es wird analog Beispiel 1a) eine Core/Shell-Emulsion hergestellt. Der Festkörpergehalt der erhaltenen Emulsion beträgt 27,95%.
b) Es wird analog Beispiel 1b) eine Core/Shell-Härtungsmittel-Suspension hergestellt, wobei 300 g Methyltetrahydrophthalsäureanhydrid, 268,3 g der Core-Shell-Emulsion und 600 ml Toluol anstelle von 400 ml Methylisobutyl eingesetzt werden.
Man erhält eine niedrigviskose Suspension des Core/Shell-Polymers im flüssigen Methyltetrahydrophthalsäureanhydrid im Verhältnis von 25:100 mit folgenden Eigenschaften:

| | |
|---|---|
| Viskosität (Epprecht) bei 40°C | 1840 mPa·s |
| Anhydrid-Gehalt | 4,63 Aequivalente/kg. |

### Beispiel 5: Herstellung einer Carbonsäureanhydrid/Zähigkeitsvermittler-Suspension

a) Es wird analog Beispiel 1a) eine Core/Shell-Emulsion hergestellt. Der Festkörpergehalt der erhaltenen Emulsion beträgt 27,5%.
b) Es wird analog Beispiel 1b) verfahren, mit dem Unterschied, dass 500 g Methylhexahydrophthalsäureanhydrid als flüssiges Anhydrid und 454,6 g der Core/Shell-Emulsion eingesetzt werden.
Man erhält eine niedrigviskose Suspension des Core/Shell-Polymers im flüssigen Methyltetrahydrophthalsäureanhydrid im Verhältnis von 25:100 mit folgenden Eigenschaften:

| | |
|---|---|
| Viskosität (Epprecht) bei 40°C | 1902 mPa·s |
| Anhydrid-Gehalt | 4,57 Aequivalente/kg. |

### Anwendungsbeispiele

### Beispiel I

100 g eines flüssigen Bisphenol A-diglycidylethers mit einem Epoxidgehalt von 5,25-5,4 Aequivalenten/kg und einer Viskosität von 11000-13000 mPa·s bei 25°C werden mit 75 g der Carbonsäureanhydrid/Zähigkeitsvermittler-Suspension gemäss Beispiel 1 gut verrührt, in eine Giessform eingefüllt und nach Evakuierung eingeschlossener Luftbläschen während 6 h bei 120°C und 12 h bei 140°C ausgehärtet. An den Formkörpern werden folgende Eigenschaften ermittelt:

| | |
|---|---|
| Glasumwandlungstempertur (gemäss TMA*) = | 149°C |
| Bruchzähigkeit (gemäss DIN 51 221) = | 294 J/m² |
| Schlagzähigkeit (gemäss ISO 197/1D) = | 40 kJ/m². |

| | |
|---|---|
| *ThermoMechanical Analyzer | |

### Beispiel II

Ein Gemisch aus 80 g N,N,N',N'-Tetraglycidyl-4,4'-diaminodiphenylmethan, 10 g eines flüssigen Bisphenol A-diglycidylethers mit einem Epoxidgehalt von 5,4 Äquivalenten/kg und 10 g Butandiol-1,4-diglycidylether wird mit 68 g der Polyamin/Zähigkeitsvermittler-Suspension gemäss Beispiel 2 gut verrührt, in eine Giessform eingefüllt und nach Evakuierung eingeschlossener Luftbläschen während 1,25 h bei 160°C und 2 h bei 180°C ausgehärtet. An den Formkörpern werden folgende Eigenschaften ermittelt:

| | |
|---|---|
| Glasumwandlungstempertur (gemäss TMA) = | 200°C |
| Bruchzähigkeit (gemäss DIN 51 221) = | 177 J/m². |

### Beispiel III

100 g eines festen Bisphenol A-diglycidylethers mit einem Epoxidgehalt von 2,60 Aequivalenten/kg werden in einem Gefäss vorgelegt und auf einer Heizplatte bei 100°C aufgeschmolzen. Dann werden 50 g der Carbonsäureanhydrid/Zähigkeitsvermittler-Suspension gemäss Beispiel 4 zur Schmelze hinzugegeben und anschliessend homogenisiert man das Gemisch während 3 Minuten bei 80°C. Danach werden 4,34 g eines aus 21,5 g Methyltetrahydrophthalsäureanhydrid und 0,24 g N-Benzyldimethylamin bei 60°C hergestellten Masterbatches zugegeben und das Gemisch wird 5 Minuten homogenisiert. Dann werden 200 g Quarzmehl (Quarzmehl W 12 der Firma Frechen) portionenweise bei 80°C eingerührt. Die Gesamtmischung wird anschliessend während 5 Minuten homogenisiert, unter Rühren bei einem Druck von 1 mbar 10 Minuten lang evakuiert. Die Schmelze wird in Giessformen eingegossen und während 16 h bei 140°C im Umluftofen gehärtet. An den erhaltenen Formkörpern werden folgende Eigenschaften ermittelt:

| | |
|---|---|
| Glasumwandlungstempertur (gemäss DSC**) | = 116°C |
| Bruchzähigkeit (gemäss DIN 51 221) | = 874 J/m² |
| Schlagbiegefestigkeit (gemäss ISO 197) | = 14 kJ/m². |

| | |
|---|---|
| ** DSC= Differential Scanning Calorimeter | |

### Beispiel IV

35 g Methyltetrahydrophthalsäureanhydrid und 1 g N-Benzyldimethylamin werden in einem Gefäss vorgelegt und unter Rühren auf einer Heizplatte in etwa 5 Minuten auf 50°C erwärmt. Dann werden 50 g der Carbonsäureanhydrid/Zähigkeitsvermittler-Suspension gemäss Beispiel 4 unter Mischen hinzugegeben, und das Gemisch wird innerhalb von 5 Minuten auf 60°C erwärmt. Unter Rühren der Mischung werden dann 100 g eines flüssigen Epoxidharzgemisches mit einem Epoxidgehalt von 3,05-3,6 Aequivalenten/kg, bestehend aus 91 Gewichtsteilen Bisphenol A-diglycidylether und 9 Gewichtsteilen Polypropylenglykol(400)-diglycidylether, und anschliessend 279 g fein verstäubtes Quarzmehl (Quarzmehl W 12) hinzugefügt und die Mischung wird auf 80°C erwärmt. Anschliessend wird die Mischung während 10 Minuten bei einem Druck von 1 mbar entgast. Die Schmelze wird in Giessformen gegossen und während 2 h bei 100°C und 16 h bei 140°C gehärtet. An den erhaltenen Formkörpern werden folgende Eigenschaften ermittelt:

| | |
|---|---|
| Glasumwandlungstempertur (gemäss DSC) = | 115°C |
| Bruchzähigkeit (gemäss DIN 51 211) = | 563 J/m² |
| Schlagbiegefestigkeit (gemäss ISO 197) = | 10 kJ/m². |

### Beispiel V

55,3 g Methyltetrahydrophthalsäureanhydrid und 0.5 g N-Benzyldimethylamin werden in einem Gefäss vorgelegt und unter Rühren auf einer Heizplatte in etwa 5 Minuten auf 50°C erwärmt. Dann werden 50 g der Carbonsäureanhydrid/Zähigkeitsvermittler-Suspension gemäss Beispiel 5 unter Mischen hinzugegeben, und das Gemisch wird innerhalb von 5 Minuten auf 60°C erwärmt. Unter Rühren der Mischung werden dann 100 g Hexahydrophthalsäurediglycidylether mit einem Epoxidgehalt von 5,95 Aequivalenten/kg und anschliessend 308 g fein Quarzmehl (Quarzmehl W12EST der Quarzwerke Frechen) hinzugefügt und die Mischung wird auf 80°C erwärmt. Anschliessend wird die Mischung während 10 Minuten bei einem Druck von 1 mbar entgast. Die Schmelze wird in Giessformen gegossen und während 2 h bei 100°C und 16 h bei 140°C gehärtet.
An den erhaltenen Formkörpern werden folgende Eigenschaften ermittelt:

| | |
|---|---|
| Glasumwandlungstempertur (gemäss DSC) = | 120°C |
| Bruchzähigkeit (gemäss DIN 51 221) = | 605 J/m² |
| Schlagbiegefestigkeit (gemäss ISO 197) = | 9 kJ/m². |

## Patentansprüche

1. Lagerstabile Suspension aus einem festen oder flüssigen Epoxidharzhärtungsmittel und einem darin homogen und feinstverteilt in Form von Partikeln suspendierten festen Pfropfpolymer oder festen Core/Shell-Polymer, das keine mit dem Härtungsmittel reaktionsfähige Gruppen aufweist, als Zähigkeitsvermittler, die erhalten wird, indem man entweder
a), bei Verwendung von wasserempfindlichen Härtungsmitteln, zur wässrigen Emulsion des Zähigkeitsvermittlers eine geeignetes organisches Lösungsmittel beigibt, das Wasser azeotrop unter Vakuum abdestilliert, dann das Epoxidharzhärtungsmittel dazugibt und das restliche Lösungsmittel abdestilliert, oder
b), bei Verwendung von wasserunempfindlichen Härtungsmitteln, die wässrige, kein oder ein organisches Lösungsmittel enthaltende Emulsion des Zähigkeitsvermittlers in das flüssige oder aufgeschmolzene Epoxidharzhärtungsmittel einträgt und das Wasser und ein gegebenenfalls vorhandenes organisches Lösungsmittel unter Vakuum abdestilliert.

2. Suspension gemäss Anspruch 1, enthaltend ein flüssiges Epoxidharzhärtungsmittel.

3. Suspension gemäss Anspruch 1, enthaltend als Epoxidharzhärtungsmittel ein Polycarbonsäureanhydrid oder ein Polyamin.

4. Suspension gemäss Anspruch 3, enthaltend ein flüssiges Polycarbonsäureanhydrid oder ein flüssiges Polyamin.

5. Suspension gemäss Anspruch 1, enthaltend ein festes Core/Shell-Polymer.

## Claims

1. A storage-stable suspension comprising a solid or liquid epoxy resin hardener and suspended therein, homogeneously and in the form of very finely divided particles, as toughener a solid graft or core/shell polymer which does not contain groups that react with the hardener, the said suspension being obtained by either
a) when using a water-sensitive hardener, adding a suitable organic solvent to the aqueous emulsion of the toughener, removing the water as an azeotrope by vacuum distillation, then adding the epoxy resin hardener and removing the residual solvent by distillation, of
b) when using a water-insensitive hardener, adding the aqueous emulsion of the toughener, which contains or does not contain an organic solvent, to the liquid or melted epoxy resin hardener, and removing the water and any organic solvent present by vacuum distillation.

2. A suspension according to claim 1, comprising a liquid epoxy resin hardener.

3. A suspension according to claim 1, comprising as epoxy resin hardener a polycarboxylic anhydride or a polyamine.

4. A suspension according to claim 3, comprising a liquid polycarboxylic anhydride or a liquid polyamine.

5. A suspension according to claim 1, comprising a solid core/shell polymer.

## Revendications

1. Suspension stable au stockage d'un durcisseur liquide ou solide de résine époxyde et d'un polymère greffé solide ou d'un polymère coeur/enveloppe solide ne présentant pas de groupes réactives avec le durcisseur, suspendu dans celle-ci sous forme de particules homogènes et divisées aussi finement que possible, en tant qu'agent de ténacité, suspension que l'on obtient, soit,
a) lorsqu'on utilise des durcisseurs sensibles à l'eau, par ajout d'un solvant organique approprié à l'émulsion aqueuse de l'agent de ténacité, en chassant l'eau par distillation azéotropique sous vide, puis en ajoutant le durcisseur de résines époxydes et en chassant le solvant restant par distillation sous vide, soit
b) lorsqu'on utilise des durcisseurs inertes à l'eau, par introduction de l'émulsion aqueuse de l'agent de ténacité, qui ne contenant pas ou contenant un solvant organique, dans le durcisseur de résines époxydes liquide ou fondu et on chasse l'eau et le solvant organique éventuellement présent par distillation sous vide.

2. Suspension selon la revendication 1, contenant un durcisseur de résine époxyde liquide.

3. Suspension selon la revendication 1, contenant comme durcisseur de résine époxyde un anhydride d'acides polycarboxyliques ou une polyamine.

4. Suspension selon la revendication 3, contenant un anhydride d'acides polycarboxyliques liquide ou une polyamine liquide.

5. Suspension selon la revendication 1, contenant un polymère coeur/enveloppe solide.
